# EUROPEAN PATENT APPLICATION

(11) **EP 0 822 004 A2**
(43) Date of publication of application: **04.02.1998**
(21) Application number: 97305737.5
(22) Date of filing: 30.07.1997
(51) Int. Cl.: B01J 20/26, B01D 53/02

(54) **An adsorbent**

(30) Priority: 31.07.1996 JP 219299/96
(71) Applicant: Seibu Giken Co., Ltd., Kasuya-gun, Fukuoka-ken 811-31 (JP); Kuma, Toshimi, Fukuoka-shi, Fukuoka-ken 813 (JP); Mitsubishi Chemicals Co., Ltd., Chiyoda-ku, Tokyo-to (JP)
(72) Inventor: Kuma, Toshimi, Fukuoka-shi, Fukuoka-ken (JP); Shirahama, Noriaki, Kasuya-gun, Fukuoka-ken (JP); Izumi, Hiroaki, Kasuya-gun, Fukuoka-ken (JP); Ohta, Yasutaka, Kasuya-gun, Fukuoka-ken (JP); Takayanagi, Hiroaki, Aoba-ku, Yokohama-shi, Kanagawa-ken (JP); Honda, Go, Aoba-ku, Yokohama-shi, Kanagawa-ken (JP)
(74) Representative: Johnson, Terence Leslie

(57) **Abstract**

The present invention provides an adsorbent for adsorbing and removing organic gases without catalyst action and with small heat capacity and small specific gravity. In one embodiment, a sheet-base carries a synthesized adsorbent consisting of divinyl benzene polymer such as styrene-divinyl benzene copolymer. The sheet-base carrying the synthesized adsorbent consisting of the divinyl benzene polymer can be formed into a honeycomb structure.

## Description

The present invention relates to an adsorbent for adsorbing and removing gaseous organic materials particularly a sheet and an element that adsorb and remove organic liquid vapor and other organic gases and volatile organic compounds (called VOC hereafter) contained in the air or in other gas phases. More particularly the invention relates to a sheet and an element using organic synthesized adsorbents as adsorbents.

For adsorption and removal in the gas phase, honeycomb elements have been used to which active carbon and zeolite are fixed as adsorbents singly or both together. For example, proposed are a honeycomb element using active carbon in the Japanese Patent Application Publication No. 59775-1986 and a honeycomb element using high-silica zeolite in the Japanese Patent Application No. 508266/1991 (U.S. Patent No. 5348922). These VOC adsorbing and removing elements are widely used in various fields where VOC is emitted in manufacturing processes in the semi-conductor industry, photo film industry, car industry, furniture industry and others, petrochemical industry and so on in order to prevent discharge of VOC to outdoors and to keep the environment clean.

Active carbon is effective for adsorption of all organic materials. On the other hand, its polarity is generally small and it locally has a small amount of functional groups. There are some kinds of active carbon with a wide distribution of radii of channels. However, for gas adsorption, considering particle diameter and size of radii of micropores of adsorbent and diffusion of the organic materials in the channels of the adsorbent particles, the active carbon used is one with channels of small diameter (e.g. the most frequent radii 10-20 Angstrom), which has a small mircopore volume and a small adsorbing volume of VOC.

The volume of ketone group solvents used in industry has increased recently. Various problems have been brought about as ketones have higher reaction abilities than other solvents and, when active carbon is used as an adsorbent, oxidization, decomposition and polymerization tend to take place due to the catalyst effect of active carbon. Decomposition and oxidization of ketones are exothermic reactions, and production of peroxide and its decomposition further accelerates the rise of temperature to cause catching fire. Acetone, ethylmethyl ketone and cyclohexanone are examples of such ketones. The cause of these phenomena is that active carbon is inflammable and has an oxidizing catalyst property.

Due to the oxidizing catalyst property of active carbon to ketone, ketones produce oxides and polymers of high boiling point while adsorption and desorption are repeated, which accumulate gradually in micropores to decrease adsorbing ability. It can be seen in cyclohexanone, for example.

On the other hand, zeolite is crystalline aluminosilicate with a micropore diameter of molecular order. It strongly adsorbs polar molecules such as water but is weak in adsorbing general VOC.

Therefore practically high-silica zeolite with a high silica-alumina ratio, which is obtained by removing aluminum from zeolite, has come to be used for adsorption and removal of VOC.

That is to say, high-silica zeolite with a high SiO₂/Al₂O₃ ratio and with less catalyst property has come to be used. This is an inorganic adsorbent which is nonflammable with no danger of an outbreak of a fire like active carbon. In manufacturing it, however, it is difficult to remove aluminum completely: its catalyst property more or less remains due to the aluminum left and some kinds of VOC may be changed in quality by catalytic action.

In manufacturing high-silica zeolite, aluminum must be removed from synthesized zeolite of crystalline structure, produced by hydrothermal reaction, without destroying crystals. Therefore its manufacturing method is extremely complicated with its yield low, which leads to high cost.

The true density of high-silica zeolite is as large as about 1.8g/cm³ and that of active carbon about 2.0g/cm³. When an adsorbing and removing element is manufactured with these, its weight becomes heavy.

An adsorbing and removing element is desirable to have true specific gravity as small as possible and to be light for keeping its physical strength. Heating is needed for desorption of VOC adsorbed, and heat capacity of adsorbent is desirable to be as small as possible from energy-saving point of view.

The present invention is intended to provide an adsorbing and removing sheet and an adsorbing and removing element which is improved compared with prior ones.

According to a first aspect of the invention there is provided an adsorbent for an organic gas, comprising divinyl benzene polymer.

According to a second aspect of the invention there is provided a method for providing an adsorbent for an organic gas, characterised by the step of providing a divinyl benzene polymer.

The term "divinyl benzene polymer" as used herein is intended to encompass both homopolymers and copolymers of divinyl benzene, and it will be understood that the polymers of the invention may be modified, for example by halogenation with bromine or iodine.

The invention will further be described by way of example with reference to the following drawings, in which,
Fig. 1 is a graph showing the results of differential thermal analysis of synthesized adsorbent of the present invention in nitrogen gas;
Fig. 2 is a graph showing the results of differential thermal analysis of synthesized adsorbent of the present invention in air;
Fig. 3 is an explanatory drawing showing an example of a use of the element for adsorbing and removing gaseous organic materials;
Fig. 4 is a graph showing characteristics of active carbon and styrene-divinyl benzene copolymer adsorbent in adsorption and desorption of cyclohexane;
Fig. 5 is a graph showing characteristics of active carbon and styrene-divinyl benzene copolymer adsorbent in adsorption and desorption of styrene;
Fig. 6 is a graph showing adsorption efficiencies of adsorbing rotors using synthesized adsorbent of the present invention, active carbon and high-silica zeolite, respectively, in processing air mixed with toluene;
Fig. 7 is a graph showing adsorption efficiencies of adsorbing rotors using synthesized adsorbent of the present invention, active carbon and high-silica zeolite, respectively, in processing air mixed with isopropyl alcohol; and
Fig. 8 is a graph showing adsorption efficiencies of adsorbing rotors using synthesized adsorbent of the present invention, active carbon and high-silica zeolite, respectively, in processing air mixed with ethylmethylketone.

### Reference Numbers

- 1: Rotor
- 2: Process zone
- 3: Reactivation zone
- 4: Cooling zone
- 5: Geared motor
- 6: Drive belt
- 7,8: Process air
- 9: Reactivation air
- 10: Reactivation heater
- 12: Clean air
- 13: Pulley
- 14,15: Fan

### Example 1

A sheet-base was made to carry an organic synthesized adsorbent consisting of styrene-divinyl benzene copolymer, which has a VOC adsorbing effect.

The ingredients of the organic synthesized adsorbents used are explained below. Synthesized adsorbents used were prepared in three dimensional crosslinking of styrene-divinyl benzene copolymer as a main ingredient as shown in Chemical Formula 1. It may be chemically modified for example by chemically combining halogen atoms such as bromine or iodine to the aromatic ring of said cross-linked copolymer.

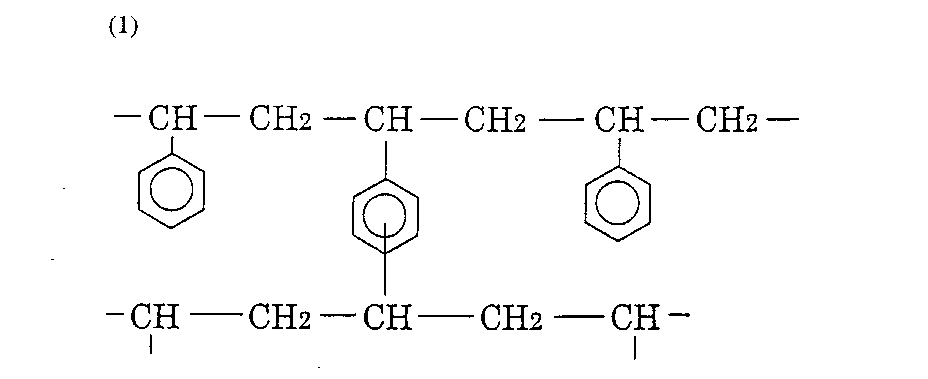

It is important for the cross-linked copolymer to have micropores and its physical property can be defined by the nitrogen adsorbing method:

The most appropriate is one with specific surface area of 300-2000m²/g and with micropore volume of 0.3-3.0ml/g.

The method of manufacturing such synthesized adsorbent is laid open to public without examination in the Japanese Patent Publication No. 89311/1984, No. 163903/1985, No. 302261/1994 and so on.

These synthesized adsorbents have no polarity and have excellent basic adsorption ability for VOC. Table 1 shows a comparison between synthesized adsorbents and active carbon and zeolite. Judging from specific surface area, micropore volume and micropore diameter, these synthesized adsorbents have adsorption ability equivalent to or more than those of active carbon and zeolite.

**Table 1**

| Comparison of synthesized adsorbent (made by Mitsubishi Chemical, consisting of styrene-divinyl benzene copolymer) with active carbon and zeolite. | | | |
|---|---|---|---|
| Capacities/Adsorbents | Specific surface area m²/g | Volume of micropore ml/g | Most frequent radii of micropore Å |
| Active carbon | 1110.2 | 0.10 | 19.1 |
| (Takeda Shirasegi Sx) | | | |
| | | | |
| High silica zeolite | 253.9 | 0.20 | 10.4 |
| (Silicalite) | | | |
| | | | |
| Synthesized adsorbent | 605.0 | 1.29 | 262.8 |
| (HP20) | | | |
| | | | |
| Synthesized adsorbent | 994.7 | 1.20 | 38.1 |
| (Trial product 1) | | | |
| | | | |
| Synthesized adsorbent | | | |
| (Trial product 2) | 1560.7 | 1.71 | 10.4 |

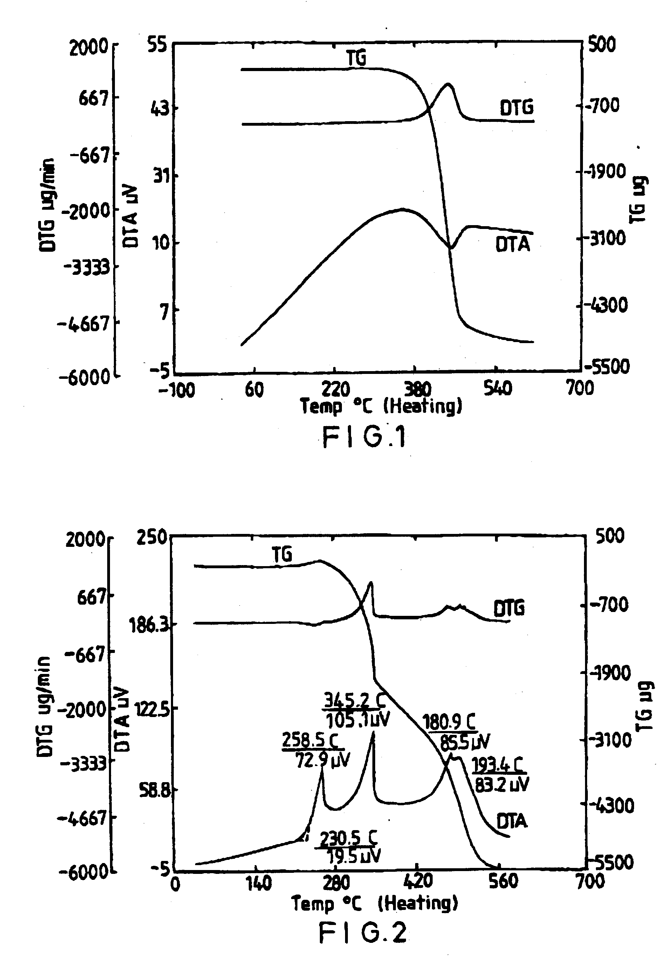

When ketones such as acetone, ethylmethyl ketone or cyclohexanone are adsorbed and desorbed using active carbon adsorbent, there exists the danger of the active carbon burning due to oxidation, decomposition and heat generation of ketones caused by the catalyst effect of active carbon. This defect can be completely removed by using the synthesized adsorbents of the present invention. The synthesized adsorbent according to the invention has no polarity and no catalyst effect at all. It has excellent heat resistance as shown in Figs. 1 and 2.

Figs. 1 and 2 show the result of thermogravimetric analysis and differential thermal analysis of this adsorbent. As shown in Fig. 1, little weight change by heat can be found up to about 300°C in nitrogenous atmosphere. As shown in Fig. 2 no thermal weight change can be observed up to about 210°C in the air. Thus it is stable to heat. The temperature needed for desorption after VOC adsorption is in the range of 120-150°C and it can fully withstand continuous use at such temperature. Therefore the danger of a fire as can happen using active carbon can never happen.

The manufacturing method of styrene-divinyl benzene copolymer, which is the synthesized polymer adsorbent of this example, has already been established and resins of this group can be mass-produced like ion-exchange resins, for example. It is also possible to make synthesized adsorbents with various adsorbing abilities freely and easily, at low cost by changing the conditions of the polymerization reaction.

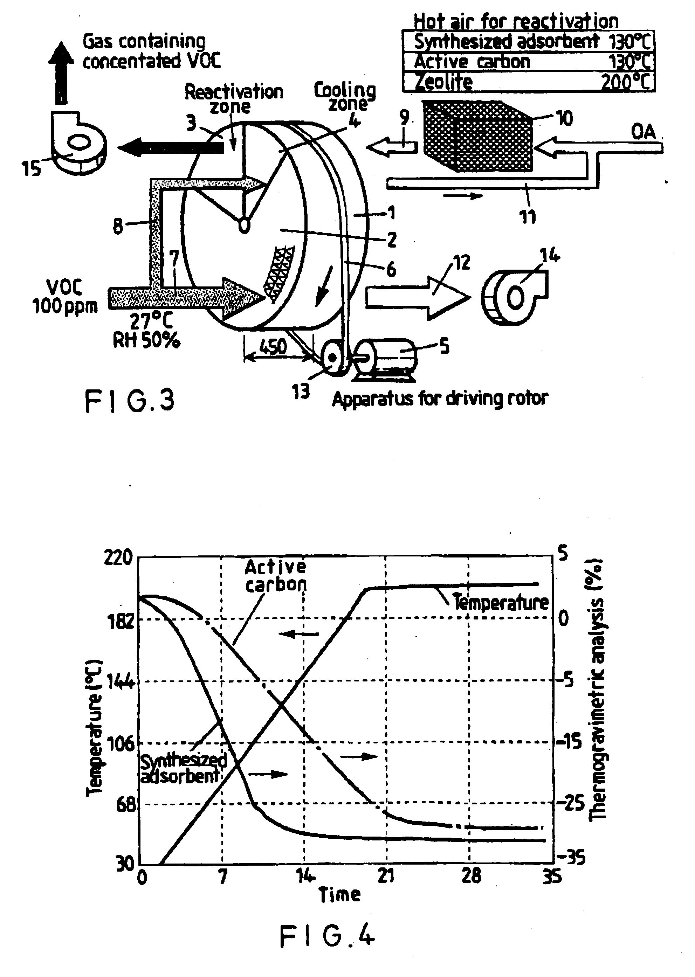

As a VOC adsorbing and removing element, a honeycomb rotor shown in Fig. 3, for example, can be used. This rotor can be as large as about 4m in diameter and 0.4-0.5m in width, for example, weighing over 1 ton. Taking into consideration, the power cost for rotating-driving a honeycomb rotor and the physical strength of the supporting part material of a honeycomb rotor etc., the specific gravity of an adsorbent should be as small as possible.

When adsorbents of the same weight are used, the smaller the true density is, the better. The true density of high-silica zeolite is about 1.8g/cc and that of active carbon is about 2.0g/cc. The true density of said synthesized adsorbent is about 1.0g/cc and it can contribute to lightening the weight of an adsorbing element. This means that said synthesized adsorbent of only about 50% of weight of high-silica zeolite is enough in order to obtain the same adsorbing performance.

As adsorbing volume of said synthesized adsorbent is actually a little larger than that of high-silica zeolite, said synthesized adsorbent of the weight of about 38% of high-silica zeolite is sufficient for the purpose.

What is more, by using this synthesized adsorbent, the heat capacity of a sheet or of an element can be decreased. Adsorption of VOC is accompanied by generation of heat (adsorption heat), which heat, when accumulated in the adsorbent, not only obstructs adsorption, but also makes heat emanation hard in the next desorbing/cooling stage, causing the need for extra energy.

In other words, as this synthesized adsorbent has a smaller heat capacity than those of the other adsorbents, its desorption speed is much faster. It is also extremely advantageous in continuous operation as it is possible to make heat energy for desorption less than that of the other adsorbents.

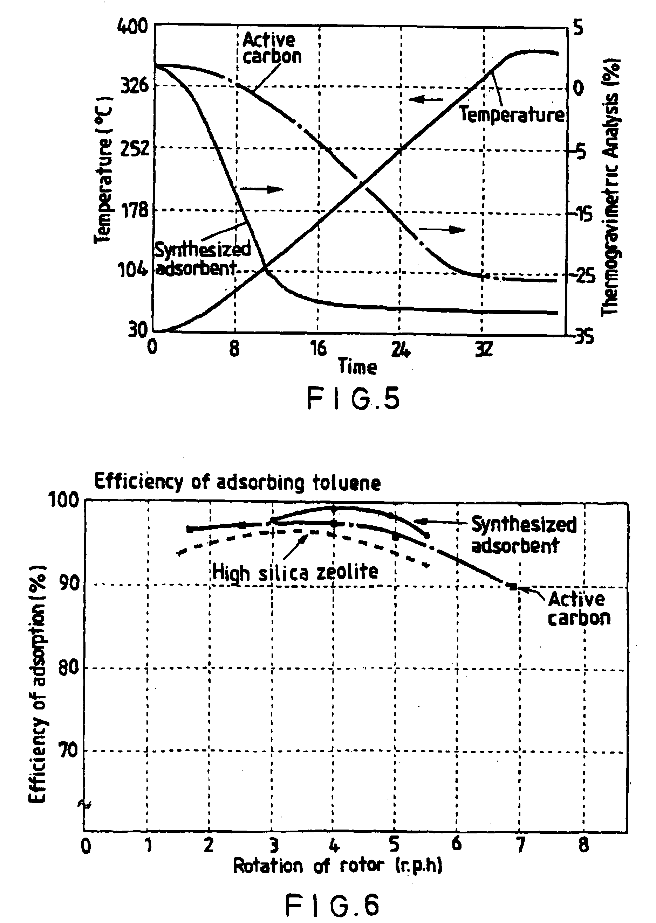

Fig. 4 shows respective characteristics of active carbon and this synthesized adsorbent in adsorption and desorption of cyclohexane. Fig. 5 shows respective characteristics of active carbon and this synthesized adsorbent in adsorption and desorption of styrene. From those figures, it can be seen that this synthesized adsorbent has a far faster desorption speed.

As this synthesized adsorbent of only about 38% weight of high-silica zeolite weight is sufficient for the purpose, the total heat capacity of the sheet or the honeycomb element using said synthesized adsorbent becomes small in due course and heat energy needed for heating an element in continuous operation becomes small.

As shown in Table 1, the micropore volume of this synthesized adsorbent is much larger than those of active carbon and adsorbents of the high-silica zeolite group. Therefore its VOC adsorption capacity is large.

Description about a micropore volume of active carbon is found in the following literatures; Reference 1; micropore volume 0.15cm³/g (Douglas M. Ruthven; Principles of Adsorption and Adsorption Processes, p.8; John Wiley & Sons), Reference 2; micropore volume 0.2832, 0.4467, 0.4296, 0.4365ml/g (New Edition: Active Carbon; Basis and Application, p.20, ed. by Fujimoto, Suzuki & Sanada, Kodansha, March 1, 1992). From such literatures, it can be seen that this synthesized adsorbent has a micropore volume much larger than that of adsorbents of active carbon group.

A description of the micropore volume of adsorbents of zeolites is found in the following literature: a micropore volume of about 0.3-0.5ml/g (Journal of Tosoh Research, Vol. 33, No. 2, 1989). From the literature, it can be seen that this synthesized adsorbent has a micropore volume much larger than that of adsorbents of the zeolite series.

As described above, as the micropore volume is larger than that of other adsorbents, the adsorbing capacity of the synthesized adsorbents of the invention is large and the quantity of adsorbent which is needed to obtain the same adsorption performance as with active carbon or zeolite should be less. This agrees with the experimental result shown below.

As shown in Fig. 3, three honeycomb rotor elements were prepared of ceramic material for solvent recovery (rotor diameter : 320mm, rotor width: 450mm, ceramic paper thickness: 0.22mm, corrugation pitch: 3.0mm,corrugation height: 1.7mm). Each ceramic honeycomb rotor was prepared by adhering a corrugated sheet and a flat sheet to each other and by rolling and laminating it.

Three types of adsorbing element were prepared, a synthesized adsorbent (polymeric) adsorbing element, a high-silica zeolite adsorbing element and an active carbon adsorbing element. To form these adsorbing elements, the corresponding adsorbent was dispersed in a liquid binder. Honeycomb rotors prepared as described above were impregnated with the dispersion to fix the dispersion on the honeycomb rotors to obtain rotors for continuous solvent recovery. By preparing sheets mainly consisting of inorganic fiber such as ceramic and glass, heat-resistant synthesized fiber such as polyamide, polyimide or sheets mainly consisting of pulp and by impregnating the sheets separately with the above-mentioned dispersions and by fixing them, or by applying the dispersions mentioned above separately on sheets of metal or synthetic resin, sheets for adsorbing and removing organic gases can be obtained.

The rotor 1 shown in Fig. 3 is supported by a casing (not shown) and is divided by separators into a process zone 2, reactivation zone 3 and a cooling zone 4. Rotor 1 is rotated by a geared motor 5 through pulley 13 and drive belt 6. More specifically, rotor 1 is rotated in the direction shown by the arrow. Gas containing VOCs is sent through the processing zone 3 via stream 7 and through the cooling zone 4 via stream 8. A heater 10 heats outer air (OA) to prepare reactivation air 9 which is sent through the reactivation zone 3. VOCs are continuously adsorbed from the stream 7 to obtain clean air 12 which is moved with fan 14. Equipment such as fan 14 and associated ducting may serve as a "gas controller", to move gaseous organic compounds over the adsorbent.

In reactivation zone 3, hot reactivation air 9 is passed through the part of the rotor which adsorbs VOCs to continuously desorb VOCs and is then sent into cooling zone 4 to cool it down by outer air 8 of normal temperature for heat recovery to obtain air 11. It is mixed with an outer air (OA) and sent into heater 10. Rotor 1 is reactivated by reactivation hot air heated by heater 10. In the drawing is shown a pulley 13 and fans 14,15 for sending process air and reactivation air.

The method so far described uses hot air for desorption and reactivation. In this case it is necessary to perform reactivation at such a temperature that the sheet used in the rotor and adsorbent fixed on it do not deteriorate. When the adsorbent is a synthesized adsorbent of the present invention or active carbon, reactivation air of 130°C is used and when it is zeolite, reactivation air of 200°C is used. It is also possible to perform reactivation by the pressure swing (PSA) method in which a high temperature is not necessary.

Table 2 shows comparison results of adsorption ratios of adsorbents of the same weight when that of the synthesized adsorbent of the present invention is 100%, using an air with toluene and isopropyl alcohol mixed as a sample to be adsorbed.

**Table 2**

| Adsorbing rates of adsorbents (%) | | |
|---|---|---|
| Synthesized adsorbents | High-silica zeolite | Active carbon |
| 100 | 42.3 | 82.4 |

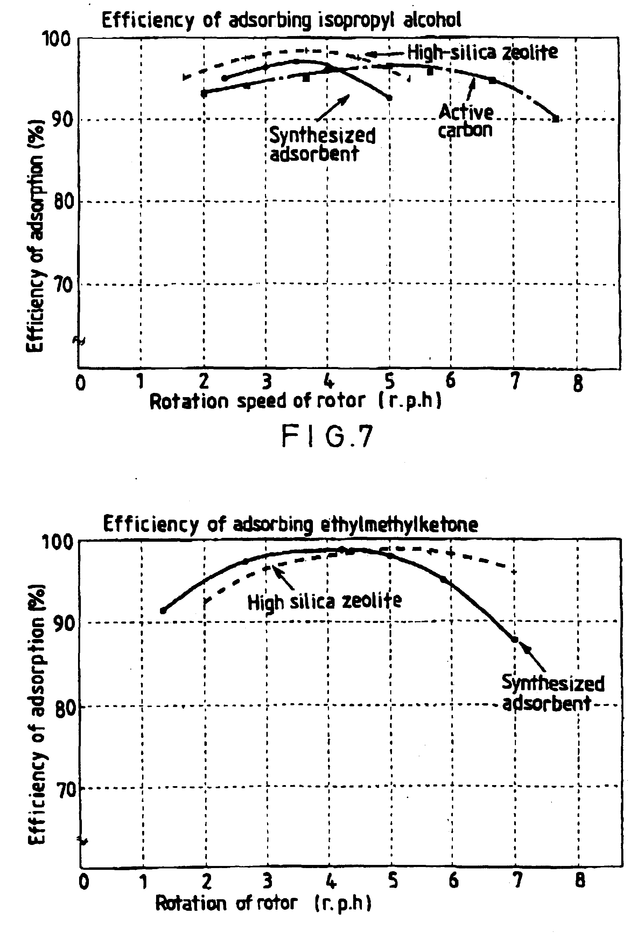

Figs. 6, 7 and 8 show adsorption efficiencies of respective rotors using a synthesized adsorbent according to the present invention and also using active carbon and high-silica zeolite as contrasting examples, treating airs mixed with toluene, isopropyl alcohol and ethyl methyl ketone respectively.

As is seen from this table and the graphs, the adsorbent of the present invention, in less quantity than the other adsorbents, displays an adsorption efficiency of the same level as the other adsorbents.

In the above examples, an element for adsorbing organic gases was made by combining a corrugated sheet and a flat sheet. Besides this, an element with many small channels may be formed by laminating plural flat sheets with many spacers in-between.

### Example 2

The above experiments were repeated with a synthesized adsorbent which consists of divinyl benzene homopolymer as shown in Chemical Formula 2. This adsorbent according to the invention has almost the same micropore diameter and surface area, and similar physical properties such as heat-resistance as styrene-divinyl benzene copolymer. It is effective in adsorbing VOCs like styrene-divinyl benzene copolymer. As the action and effect of this embodiment is the same as that of the above-mentioned embodiment, further explanation is omitted.

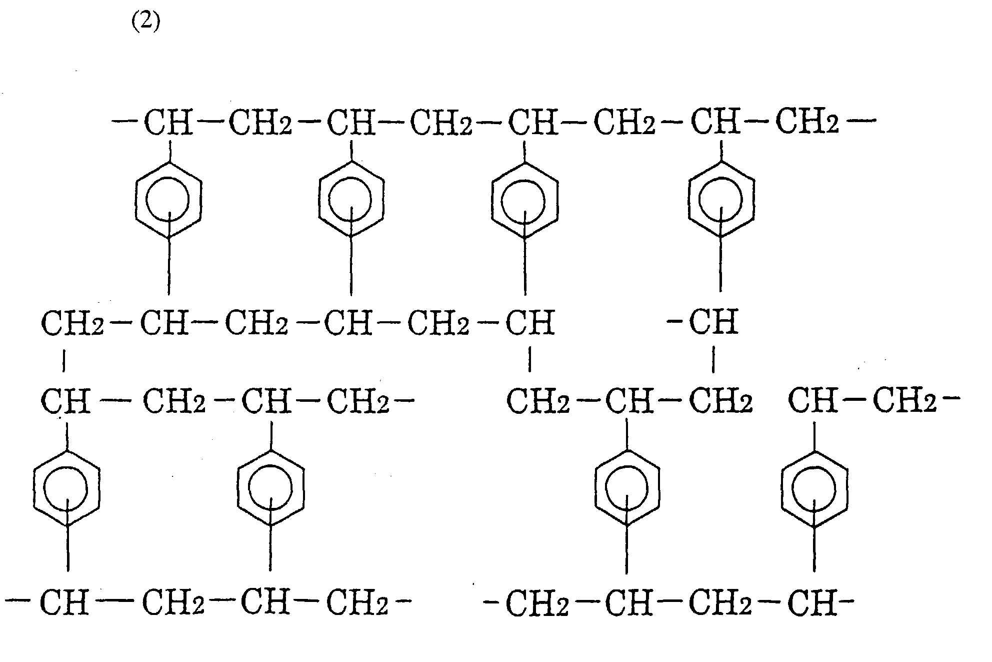

### Example 3

Adsorbing elements formed with a plurality of channels were made as follows: Powder of organic synthesized adsorbent, consisting of styrene-divinyl benzene copolymer, or of organic synthesized adsorbent, consisting of divinyl benzene homopolymer (shown in Chemical Formula 2), a binder such as epoxy resin and a curing agent for the epoxy resin were mixed and kneaded. When a slurry was obtained, the mixture was extruded from a nozzle to form a honeycomb structure with many small channels. This honeycomb structure was left in an atmosphere of normal ambient temperature until the epoxy resin hardened to give an element for adsorbing and removing gaseous organic materials.

From the above it will be apparent that sheets for adsorbing and removing gaseous organic materials and elements for adsorbing and removing gaseous organic materials according to the invention formed as mentioned above, are stable against heat and do not at all have a danger of an outbreak of fire by adsorption heat such as in the case of active carbon. What is more, they are lighter and with less heat capacity than prior sheets and prior elements for adsorbing and removing gaseous organic materials. A little reactivation heat energy is needed and they are easily formed into an adsorbing and removing element of large size. They are advantageous in continuous operation as they have high adsorption and desorption speed. In VOC adsorbing efficiency, they have the merits of both zeolite and active carbon, but they are superior to zeolite or active carbon, because they do not suffer from the same disadvantages.

## Claims

1. An adsorbent for an organic gas characterized by a divinyl benzene polymer.

2. An adsorbent according to Claim 1, characterized in that the divinyl benzene polymer comprises a homopolymer or a copolymer.

3. An adsorbent according to Claim 2, characterized in that the divinyl benzene polymer comprises styrene-divinyl benzene copolymer.

4. An adsorbent according to any preceding claim, characterized in that the divinyl benzene polymer is substituted with iodine and/or bromine.

5. An adsorbent according to any preceding claim, characterized in that said adsorbent has micropores of 3-500 Angstrom radius and specific surface area of more than 300 m²/g.

6. An adsorbent according to any preceding claim, characterized in that the adsorbent has a micropore volume of 0.30-3.0ml/g.

7. An adsorbent according to any preceding claim, characterized in that it includes a carrier for the divinyl benzene polymer.

8. An adsorbent according to Claim 7, characterized in that the carrier comprises a sheet.

9. An adsorbent according to Claim 8, characterized in that the sheet comprises a material selected from a group consisting of inorganic fiber, pulp, heat-resistant synthesized fiber, metal and a synthetic resin.

10. An adsorbent according to Claim 7, characterized in that the carrier comprises a three dimensional shape with a plurality of channels.

11. An adsorbent according to Claim 6, characterized in that the carrier comprises a settable binder mixed with the divinyl benzene polymer in its unset state.

12. An adsorbent according to Claim 11, characterized in that the carrier comprises an element including a plurality of channels formed from the binder/polymer mixture in its set state.

13. An adsorbent according to Claim 12, characterized in that the element is formed by extrusion of the mixture.

14. A method of providing an adsorbent for an organic gas, characterized by the step of providing a divinyl benzene polymer.

15. A method according to Claim 14, characterized by the step of providing a carrier for the divinyl benzene polymer.

16. A method according to Claim 15, characterized in that the carrier comprises inorganic fiber, pulp, heat resistant synthesised fiber, metal or a synthetic resin.

17. A method according to Claim 15, characterized in that the carrier comprises a settable binder, which is mixed with the polymer.

18. A method according to Claim 17, characterized by the step of extruding the mixture to form the adsorbent.

19. The use of a divinyl benzene polymer as an adsorbent for an organic gas.
